(19) Europäisches Patentamt
European Patent Office
Office européen des brevets

(11) EP 4 564 054 A1

(12) EUROPÄISCHE PATENTANMELDUNG

(43) Veröffentlichungstag:
04.06.2025 Patentblatt 2025/23

(21) Anmeldenummer: 23212650.8

(22) Anmeldetag: 28.11.2023

(51) Internationale Patentklassifikation (IPC):
G01S 7/539 (2006.01)    G01S 15/931 (2020.01)

(52) Gemeinsame Patentklassifikation (CPC):
G01S 15/931; G01S 7/539; G01S 15/34

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Elmos Semiconductor SE
44227 Dortmund (DE)

(72) Erfinder: SPIEGEL, Egbert
45770 Marl (DE)

(74) Vertreter: Wenzel Nemetzade Warthmüller
Patentanwälte Part mbB
Maximilianstraße 2
80539 München (DE)

(54) VERFAHREN ZUM KLASSIFIZIEREN MINDESTENS EINES OBJEKTS ANHAND DER HÖHE

(57) Es wird ein Verfahren zum Klassifizieren mindestens eines Objekts (40) anhand der Höhe des Objekts (40) auf Grundlage der Daten eines von dem Objekt (40) reflektierten Ultraschallsignals (37) vorgeschlagen, wobei das Verfahren folgende Schritte umfasst: Empfangen der Daten des reflektierten Ultraschallsignals (37); Bestimmen eines ersten Summenwerts, wobei der erste Summenwert die Summe der Werte des reflektierten Ultraschallsignals (37) in einem ersten vorgegebenen Bereich (50) um ein globales Maximum des reflektierten Ultraschallsignals (37) herum ist oder der erste Summenwert die Summe der potenzierten Werte des reflektierten Ultraschallsignals (37) in einem ersten vorgegebenen Bereich (50) um ein globales Maximum des reflektierten Ultraschallsignals (37) herum ist; Bestimmen eines zweiten Summenwerts, wobei der zweite Summenwert die Summe der Werte des reflektierten Ultraschallsignals (37) in einem zweiten vorgegebenen Bereich (60), der dem ersten vorgegebenen Bereich (50) unmittelbar vorgelagert ist, ist oder der zweite Summenwert die Summe der potenzierten Werte des reflektierten Ultraschallsignals (37) in einem zweiten vorgegebenen Bereich (60), der dem ersten vorgegebenen Bereich (50) unmittelbar vorgelagert ist, ist; Bestimmen eines dritten Summenwerts, wobei der dritte Summenwert die Summe der Werte des reflektierten Ultraschallsignals (37) in einem dritten vorgegebenen Bereich (70), der dem ersten vorgegebenen Bereich (50) unmittelbar nachgelagert ist, ist oder der dritte Summenwert die Summe der potenzierten Werte des reflektierten Ultraschallsignals (37) in einem dritten vorgegebenen Bereich (70), der dem ersten vorgegebenen Bereich (50) unmittelbar nachgelagert ist, ist; Bestimmen eines ersten Differenzwerts auf Grundlage einer, insbesondere gewichteten, Differenzbildung aus dem dritten Summenwert und dem ersten Summenwert; Bestimmen eines zweiten Differenzwerts auf Grundlage einer, insbesondere gewichteten, Differenzbildung aus dem zweiten Summenwert und dem ersten Summenwert; und Klassifizieren des mindestens einen Objekts (40) auf Grundlage des ersten Differenzwertwerts und des zweiten Differenzwertwerts, insbesondere auf Grundlage der Vorzeichen des ersten Differenzwertwerts und des zweiten Differenzwertwerts, in eine von zumindest zwei Höhenkategorien.

Fig. 3

**Beschreibung**

Die Erfindung betrifft ein Verfahren zum Klassifizieren mindestens eines Objekts anhand der Höhe des Objekts.

Stand der Technik

Die Höhe von Objekten kann mittels eines Ultraschallsignals bestimmt werden bzw. die Objekte können entsprechend ihrer Höhe klassifiziert werden.

Bei Verfahren zum Klassifizieren von Objekten anhand der Höhe mittels reflektierten Ultraschalls wird im Stand der Technik ein Maximalwert bzw. werden mehrere Maximalwerte des reflektierten Ultraschallsignals betrachtet. Ein Objekt, das sich zumindest teilweise über die Höhenposition des Ultraschallsenders/Ultraschallempfängers nach oben erstreckt, wird anhand von zwei lokalen Maxima des von dem Objekt reflektierten Ultraschallsignals identifiziert. Diese Identifizierung bzw. Klassifizierung ist jedoch, insbesondere bei Kraftfahrzeugen im Außenbereich, unzuverlässig.

Eine andere Möglichkeit zum Klassifizieren von Objekten anhand der Höhe des Objekts mittels reflektierten Ultraschalls ist die Klassifikation der Objekte mit einem neuronalen Netzwerk, d.h. der Analyse des von dem Objekt reflektierten Ultraschallsignals mittels eines neuronalen Netzwerks. Nachteilig hieran ist jedoch, dass das neuronale Netzwerk individuell trainiert werden muss, insbesondere auch abhängig von der Einbauhöhe des Ultraschallempfängers.

Offenbarung der Erfindung

Der vorliegenden Erfindung liegt die Aufgabe zu Grunde, ein Verfahren zum Klassifizieren mindestens eines Objekts anhand der Höhe aufzuzeigen, das technisch einfach und zuverlässig ist.

Diese Aufgabe wird durch ein Verfahren gemäß Anspruch 1 gelöst.

Insbesondere wird die Aufgabe durch Verfahren zum Klassifizieren mindestens eines Objekts anhand der Höhe des Objekts auf Grundlage der Daten eines von dem Objekt reflektierten Ultraschallsignals gelöst, wobei das Verfahren folgende Schritte umfasst: Empfangen der Daten des reflektierten Ultraschallsignals; Bestimmen eines ersten Summenwerts, wobei der erste Summenwert die Summe der Werte des reflektierten Ultraschallsignals in einem ersten vorgegebenen Bereich um ein globales Maximum des reflektierten Ultraschallsignals herum ist oder der erste Summenwert die Summe der potenzierten Werte des reflektierten Ultraschallsignals in einem ersten vorgegebenen Bereich um ein globales Maximum des reflektierten Ultraschallsignals herum ist; Bestimmen eines zweiten Summenwerts, wobei der zweite Summenwert die Summe der Werte des reflektierten Ultraschallsignals in einem zweiten vorgegebenen Bereich, der dem ersten vorgegebenen Bereich unmittelbar vorgelagert ist, ist oder der zweite Summenwert die Summe der potenzierten Werte des reflektierten Ultraschallsignals in einem zweiten vorgegebenen Bereich, der dem ersten vorgegebenen Bereich unmittelbar vorgelagert ist, ist; Bestimmen eines dritten Summenwerts, wobei der dritte Summenwert die Summe der Werte des reflektierten Ultraschallsignals in einem dritten vorgegebenen Bereich, der dem ersten vorgegebenen Bereich unmittelbar nachgelagert ist, ist oder der dritte Summenwert die Summe der potenzierten Werte des reflektierten Ultraschallsignals in einem dritten vorgegebenen Bereich, der dem ersten vorgegebenen Bereich unmittelbar nachgelagert ist, ist; Bestimmen eines ersten Differenzwerts auf Grundlage einer, insbesondere gewichteten, Differenzbildung aus dem dritten Summenwert und dem ersten Summenwert; Bestimmen eines zweiten Differenzwerts auf Grundlage einer, insbesondere gewichteten, Differenzbildung aus dem zweiten Summenwert und dem ersten Summenwert; und Klassifizieren des mindestens einen Objekts auf Grundlage des ersten Differenzwertwerts und des zweiten Differenzwertwerts, insbesondere auf Grundlage der Vorzeichen des ersten Differenzwertwerts und des zweiten Differenzwertwerts, in eine von zumindest zwei Höhenkategorien.

Ein Vorteil hiervon ist, dass das Verfahren technisch einfach ist bzw. mit geringen technischen Ressourcen ausführbar ist. Dies bedeutet insbesondere, dass zur Durchführung des Verfahrens nur geringer Rechenaufwand notwendig ist. Somit kann das Verfahren mit kostengünstiger Hardware durchgeführt werden. Zudem ist das Verfahren bzw. die Klassifikation sehr zuverlässig. Darüber hinaus funktioniert das Verfahren unabhängig von der Einbauhöhe bzw. Positionshöhe des Ultraschallsenders/Ultraschallempfängers, d.h. das Verfahren muss nicht an die Höhe des Ultraschallsenders/Ultraschallempfängers spezifisch angepasst werden.

Insbesondere wird die Aufgabe durch ein Computerprogrammprodukt gelöst, das von einem Prozessor eines Computers lesbare Instruktionen aufweist, die, wenn sie von dem Prozessor ausgeführt werden, den Prozessor veranlassen, das oben beschriebene Verfahren auszuführen. Insbesondere wird die Aufgabe auch durch ein computerlesbares Medium, auf dem ein solches Computerprogramm gespeichert ist, gelöst.

Die oben genannte Aufgabe wird durch eine Auswertevorrichtung gemäß Anspruch 11 gelöst.

Insbesondere wird die Aufgabe durch eine Auswertevorrichtung zum Auswerten eines von einem Objekt reflektierten Ultraschallsignals gelöst, wobei die Auswertevorrichtung - zum Empfangen der Daten des reflektierten Ultraschallsignals, - zum Bestimmen eines ersten Summenwerts, wobei der erste Summenwert die Summe der Werte des reflektierten Ultraschallsignals in einem ersten vorgegebenen Bereich um ein globales Maximum des reflektierten Ultraschallsignals herum ist oder der erste Summenwert die Summe der potenzierten Werte des reflektierten Ultraschallsignals in einem ersten vorgegebenen Bereich um ein globales Maximum des reflektierten Ultraschallsignals herum ist, - zum Bestimmen eines zweiten Summenwerts, wobei der zweite Summenwert die Summe der Werte des reflektierten Ultraschallsignals in einem zweiten vorgegebenen Bereich, der dem ersten vorgegebenen Bereich unmittelbar vorgelagert ist, ist oder der zweite Summenwert die Summe der potenzierten Werte des reflektierten Ultraschallsignals in einem zweiten vorgegebenen Bereich, der dem ersten vorgegebenen Bereich unmittelbar vorgelagert ist, ist, - zum Bestimmen eines dritten Summenwerts, wobei der dritte Summenwert die Summe der Werte des reflektierten Ultraschallsignals in einem dritten vorgegebenen Bereich, der dem ersten vorgegebenen Bereich unmittelbar nachgelagert ist, ist oder der dritte Summenwert die Summe der potenzierten Werte des reflektierten Ultraschallsignals in einem dritten vorgegebenen Bereich, der dem ersten vorgegebenen Bereich unmittelbar nachgelagert ist, ist, - zum Bestimmen eines ersten Differenzwerts auf Grundlage einer, insbesondere gewichteten, Differenzbildung aus dem dritten Summenwert und dem ersten Summenwert, - zum Bestimmen eines zweiten Differenzwerts auf Grundlage einer, insbesondere gewichteten, Differenzbildung aus dem zweiten Summenwert und dem ersten Summenwert, und - zum Klassifizieren des mindestens einen Objekts auf Grundlage des ersten Differenzwertwerts und des zweiten Differenzwertwerts, insbesondere auf Grundlage der Vorzeichen des ersten Differenzwertwerts und des zweiten Differenzwertwerts, in eine von zumindest zwei Höhenkategorien ausgebildet ist.

Vorteilhaft hieran ist, dass die Auswertevorrichtung technisch einfach und kostengünstig ausgebildet sein kann. Insbesondere benötigt die Auswertevorrichtung nur geringe Rechenkapazitäten. Darüber hinaus kann die Auswertevorrichtung die Klassifikation zuverlässig zutreffend durchführen. Ein weiterer Vorteil ist, dass die Auswertevorrichtung nicht spezifisch an die Einbauhöhe des Ultraschallsenders/Ultraschallempfängers angepasst sein muss.

Die oben genannte Aufgabe wird durch ein System gelöst, das eine oben beschriebene Auswertevorrichtung, einen Ultraschallsender zum Senden des Ultraschallsignals in Richtung eines Objekts, und einen Ultraschallempfänger zum Empfangen des von dem Objekt reflektierten Ultraschallsignals und zum Weiterleiten der Daten des reflektierten Ultraschallsignals an die Auswertevorrichtung umfasst.

Die oben genannte Aufgabe wird auch durch ein Kraftfahrzeug mit einem oben beschriebenen System gelöst.

Gemäß einer Ausführungsform des Verfahrens wird bei der Bestimmung des ersten Differenzwerts der dritte Summenwert mit einem vorgegebenen Faktor und/oder bei der Bestimmung des zweiten Differenzwerts der zweite Summenwert mit einem vorgegebenen Faktor multipliziert. Ein Vorteil hiervon ist, dass hierdurch die Klassifikation präzise eingestellt werden kann. Dies bedeutet, dass durch den vorgegebenen Faktor bestimmt werden kann, wann ein Objekt in eine erste Kategorie (z.B. hohes Objekt) und wann dasselbe Objekt in eine andere zweite Kategorie (z.B. niedriges Objekt) klassifiziert bzw. kategorisiert wird.

Gemäß einer Ausführungsform des Verfahrens wird das mindestens eine Objekt als ein Objekt, das sich im Wesentlichen vollständig unterhalb der Höhe eines Ultraschallempfängers des reflektierten Ultraschallsignals befindet, klassifiziert, wenn sowohl der erste Differenzwert als auch der zweite Differenzwert ein negatives Vorzeichen aufweisen. Hierdurch werden Objekte, die sich im Wesentlichen vollständig unterhalb der Höhenposition eines Ultraschallempfängers des reflektierten Ultraschallsignals befinden, technisch einfach und zuverlässig als solche klassifiziert. Zudem werden die Objekte hierdurch zuverlässig zutreffend klassifiziert.

Gemäß einer Ausführungsform des Verfahrens wird das mindestens eine Objekt als ein Objekt, das sich zumindest teilweise oberhalb einer Höhe eines Ultraschallempfängers des reflektierten Ultraschallsignals befindet, klassifiziert, wenn der erste Differenzwert ein positives Vorzeichen oder der zweite Differenzwert ein positives Vorzeichen aufweist.

Vorteilhaft hieran ist, dass Objekte, die sich zumindest teilweise oberhalb der Höhenposition eines Ultraschallempfängers des reflektierten Ultraschallsignals befinden (z.B. eine Wand oder ähnliches), technisch einfach und zuverlässig als in die entsprechende Kategorie bzw. Klasse eingeordnet bzw. als solche klassifiziert werden können. Darüber hinaus ist die Klassifizierung solcher Objekte hierdurch besonders zuverlässig.

Gemäß einer Ausführungsform des Verfahrens wird das mindestens eine Objekt als ein Objekt, das mehrere reflektierende Flächen aufweist, klassifiziert, wenn der erste Differenzwert ein positives Vorzeichen und der zweite Differenzwert ein positives Vorzeichen aufweisen. Auf diese Weise werden auch Objekte, die mehrere unterschiedliche das Ultraschallsignal reflektierende Flächen aufweisen, zuverlässig in eine eigene Kategorie klassifiziert. Hierdurch können sogenannte komplexe Objekte, d.h. Objekte mit einer Vielzahl unterschiedlicher reflektierender Flächen, zuverlässig und technisch einfach als solche klassifiziert werden.

Gemäß einer Ausführungsform des Verfahrens werden bei dem Schritt des Klassifizierens des Objekts zusätzliche Sensorinformationen, insbesondere visuelle Sensorinformationen, über das Objekt berücksichtigt. Hierdurch kann, insbesondere bei Objekten, die mehrere Reflektionsflächen für das Ultraschallsignal aufweisen, zuverlässig bestimmt werden, ob das Objekt eine Höhe größer als eine vorgegebene Höhe aufweisen oder nicht. Aus diese Weise kann z.B. bei Kraftfahrzeugen bestimmt werden, ob das Objekt für das Kraftfahrzeug (ohne größere zu erwartende Schäden) überfahrbar ist oder nicht. Die zusätzliche Sensorinformation kann z.B. von einer Kamera, einem LIDAR-Gerät oder ähnlichen stammen. Eine Erkennungseinheit kann die zusätzlichen Informationen und die Klassifikation mittels Ultraschallsignals zusammenführen und eine Entscheidung hinsichtlich der Höhe des Objekts treffen.

Gemäß einer Ausführungsform des Verfahrens umfasst oder ist das Ultraschallsignal ein lineares Ultraschallsignal mit, insbesondere konstant, ansteigender oder abfallender Frequenz. Vorteilhaft hieran ist, dass die lokalen Maxima des reflektierten Ultraschallsignals besonders deutlich voneinander getrennt sind. Auf diese Weise kann die Klassifikation noch zuverlässiger durchgeführt werden.

Gemäß einer Ausführungsform des Verfahrens wird ferner eine Wahrscheinlichkeitskennzahl, die die Zuverlässigkeit der durchgeführten Klassifikation des mindestens einen Objekts angibt, auf Grundlage der Summenwerte bestimmt. Vorteilhaft hieran ist, dass das Verfahren nicht nur eine Klassifikation der Höhe des Objekts durchführt, sondern auch noch die Zuverlässigkeit dieser Klassifikation als Wahrscheinlichkeitskennzahl ausgibt. Somit kann eingeschätzt werden, wie klar bzw. eindeutig die Entscheidung hinsichtlich der Klassifikation war.

Gemäß einer Ausführungsform des Verfahrens wird das mindestens eine Objekt als ein Objekt, das sich fast bis zu der Höhe eines Ultraschallempfängers des reflektierten Ultraschallsignals erstreckt, klassifiziert, wenn das Vorzeichen des ersten Differenzwerts negativ ist und das Vorzeichen des zweiten Differenzwerts positiv ist. Ein Vorteil hiervon ist, dass Objekte, die sich bis knapp unterhalb der Höhe des Ultraschallempfängers erstrecken, von anderen Objekten, deren oberes Ende deutlich unterhalb der Höhenposition des Ultraschallempfängers ist, und Objekten, deren oberes Ende deutlich oberhalb der Höhenposition des Ultraschallempfängers ist, klar bzw. eindeutig unterscheiden lassen.

Gemäß einer Ausführungsform des Verfahrens umfasst das Verfahren ferner folgende Schritte: Bestimmen eines vierten Summenwerts, wobei der vierte Summenwert die Summe der Werte des reflektierten Ultraschallsignals in einem vierten vorgegebenen Bereich um ein lokales Maximum des reflektierten Ultraschallsignals herum ist oder der vierte Summenwert die Summe der potenzierten Werte des reflektierten Ultraschallsignals in einem vierten vorgegebenen Bereich um ein lokales Maximum des reflektierten Ultraschallsignals herum ist, wobei der vierte vorgegebene Bereich dem ersten vorgegeben Bereich nachgeordnet ist; Bestimmen eines fünften Summenwerts, wobei der fünfte Summenwert die Summe der Werte des reflektierten Ultraschallsignals in einem fünften vorgegebenen Bereich, der dem vierten vorgegebenen Bereich unmittelbar vorgelagert ist, ist oder der fünfte Summenwert die Summe der potenzierten Werte des reflektierten Ultraschallsignals in einem fünften vorgegebenen Bereich, der dem vierten vorgegebenen Bereich unmittelbar vorgelagert ist, ist; Bestimmen eines sechsten Summenwerts, wobei der sechste Summenwert die Summe der Werte des reflektierten Ultraschallsignals in einem sechsten vorgegebenen Bereich, der dem vierten vorgegebenen Bereich unmittelbar nachgelagert ist, ist oder der sechste Summenwert die Summe der potenzierten Werte des reflektierten Ultraschallsignals in einem sechsten vorgegebenen Bereich, der dem vierten vorgegebenen Bereich unmittelbar nachgelagert ist, ist; Bestimmen eines dritten Differenzwerts auf Grundlage einer, insbesondere gewichteten, Differenzbildung aus dem sechsten Summenwert und dem vierten Summenwert; Bestimmen eines vierten Differenzwerts auf Grundlage einer, insbesondere gewichteten, Differenzbildung aus dem fünften Summenwert und dem vierten Summenwert; wobei der Schritt des Klassifizierens des mindestens einen Objekts in eine von zumindest zwei Höhenkategorien auf Grundlage des ersten Differenzwertwerts, des zweiten Differenzwertwerts, des dritten Differenzwerts und des vierten Differenzwerts durchgeführt wird. Ein Vorteil hiervon ist, dass mehrere Objekte unabhängig voneinander klassifiziert werden können bzw. komplexe Objekte mit mehreren Reflektionsflächen zuverlässig als solche klassifiziert werden können. Vorteilhaft hieran ist, dass komplexe Objekte, d.h. Objekte mit mehreren Reflektionsflächen zuverlässig klassifiziert werden können.

Unter "Klassifizieren der Höhe mindestens eines Objekts" kann insbesondere verstanden werden, dass bestimmt wird, ob die Höhe eines Objekts zu einer ersten Kategorie oder zu einer zweiten Kategorie (oder ggf. weiteren Kategorien) der Höhe gehört. Dies bedeutet, dass die Höhe der Objekte nicht absolut bzw. präzise bestimmt wird bzw. bestimmt werden muss, sondern nur bestimmt wird bzw. werden muss, ob die Höhe des Objekts oberhalb oder unterhalb eines ersten Schwellenwerts (und ggf. oberhalb oder unterhalb weiterer Schwellenwerte) liegt. Bei beispielsweise zwei Kategorien der Klassifikation muss somit nur bestimmt werden, ob die Höhe des Objekts größer als ein Schwellenwert ist oder kleiner als der Schwellenwert, der beide Kategorien voneinander trennt.

Unter "Höhe des Objekts" kann insbesondere die relative Höhe zu dem Ultraschallsender/Ultraschallempfänger bzw. seiner Höhenposition verstanden werden. Dies bedeutet, dass keine absolute Höhe (über dem Boden oder ähnliches) bestimmt wird bzw. werden muss, sondern die Höhe des Objekts relativ zu der Höhe des Ultraschallsenders/Ultraschallempfängers bestimmt werden kann. Denkbar ist jedoch, dass unter "Höhe des Objekts" die absolute Höhe des Objekts über dem Boden verstanden wird.

Unter "der Summe der Werte des reflektierten Ultraschallsignals in einem ersten vorgegebenen Bereich um ein globales Maximum des reflektierten Ultraschallsignals herum" kann insbesondere die Fläche unter dem reflektierten Ultraschallsignal in dem genannten Bereich gemeint sein. Alternativ kann die Summe der Quadrate der Werte des Signals des reflektierten Ultraschallsignals in dem genannten Bereich berechnet werden, wobei die Summe der Quadrate der Messwerte der Energie des reflektierten Ultraschallsignals in diesem Bereich entspricht. Der "Bereich um das globale Maximum herum" kann sich symmetrisch oder asymmetrisch teilweise in eine erste Richtung (z.B. hinsichtlich der Laufzeit des Signals) von dem Maximum erstrecken und sich teilweise in eine zweite der ersten Seite entgegengesetzten Richtung (z.B. hinsichtlich der Laufzeit des Signals) von dem Maximum erstrecken. Es wird sozusagen von der Position des Maximums aus ein bestimmter Teil vor dem Maximum und nach dem Maximum hinzugenommen, um den ersten vorgegebenen Bereich zu bilden.

Das Ultraschallsignal kann insbesondere mit einem Ultraschallempfänger/Ultraschallsender-System ausgesendet und mittels diesem das reflektierte Ultraschallsignal empfangen werden. Der Ultraschallsender kann somit gleichzeitig als Ultraschallempfänger fungieren bzw. der Ultraschallsender kann auch den reflektierten Ultraschall empfangen.

Unter "anhand der Höhe des Objekts" kann insbesondere verstanden werden, dass festgestellt wird, ob das Objekt sich bis zu einer Position nach oben erstreckt, die sich unterhalb der Position des Ultraschallempfänger-Ultraschallsender-Systems, das das Ultraschallsignal sendet und empfängt, befindet, oder ob sich das Objekt bis zu einer Position erstreckt, die sich oberhalb der Position des Ultraschallempfänger-Ultraschallsender-Systems befindet. Somit kann "anhand der Höhe des Objekts" insbesondere die relative Höhe in Bezug auf die Höhenposition des Ultraschallempfänger-Ultraschallsender-Systems, das das Ultraschallsignal sendet und empfängt, sein.

Unter "Höhe" kann insbesondere die Position des obersten Punkts einer Fläche eines Objekts oder des Objekts verstanden werden, d.h. eines Punkts des Objekts, der am weitesten von z.B. dem Boden oder der Straße entfernt ist.

Unter "einem zweiten vorgegebenen Bereich, der dem ersten vorgegebenen Bereich unmittelbar vorgelagert ist" kann insbesondere ein Bereich verstanden werden, der reflektierten Ultraschall von einem Objekt oder Teil eines Objekts enthält, dessen Reflektionsflächen näher an dem Ultraschallsender/Ultraschallempfänger sind als Reflektionsflächen eines Objekts, dessen reflektierter Ultraschall in dem ersten vorgegebenen Bereich liegt. Reflektierter Ultraschall, der von Objekten oder Reflektionsflächen, die näher an dem Ultraschallsender/Ultraschallempfänger sind als weiter entfernte Objekte oder Reflektionsflächen, stammt, hat eine kürzere Laufzeit und befindet sich daher in einem zweiten Bereich, der dem ersten vorgegebenen Bereich, in dem sich das globale Maximum befindet, (zeitlich) vorgelagert ist.

Unter "einem dritten vorgegebenen Bereich, der dem ersten vorgegebenen Bereich unmittelbar nachgelagert ist" kann insbesondere ein Bereich verstanden werden, in dem reflektierter Ultraschall enthalten ist, der von Objekten bzw. Reflektionsflächen von Objekten enthalten ist, der weiter von dem Ultraschallsender/Ultraschallempfänger entfernt ist als reflektierter Ultraschall in dem ersten vorgegebenen Bereich, in dem sich das globale Maximum befindet. Daher hat der Ultraschall in dem dritten vorgegebenen Bereich eine längere Laufzeit und der dritte Bereich ist dem ersten Bereich zeitlich unmittelbar nachgelagert. Dies bedeutet, dass der reflektierte Ultraschall in dem dritten Bereich später empfangen wird als der reflektierte Ultraschall in dem ersten vorgegebenen Bereich.

Unter dem Begriff "vorgelagert" kann insbesondere verstanden werden, dass ein Bereich Signale bzw. Messwerte des reflektierten Ultraschallsignals aufweist, die eine kürzere Laufzeit hatten als Signale in einem "nachgelagerten" Bereich. Somit stammen Signale bzw. Messwerte aus einem vorgelagerten Bereich von Reflektionsflächen, die näher an dem Ultraschallempfänger sind, und Signale bzw. Messwerte aus einem nachgelagerten Bereich stammen von Reflektionsflächen, die weiter weg von dem Ultraschallempfänger sind.

Bevorzugte Ausführungsformen ergeben sich aus den Unteransprüchen. Nachfolgend wird die Erfindung anhand von Zeichnungen von Ausführungsbeispielen näher erläutert. Hierbei zeigen

Fig. 1    eine schematische Ansicht einer beispielhaften ersten Ausführungsform des erfindungsgemäßen Kraftfahrzeugs;

Fig. 2    eine schematische Ansicht des ausgesendeten Ultraschallsignals bei einem nichthohen bzw. niedrigen Objekt;

Fig. 3    eine schematische Darstellung des reflektierten Ultraschallsignals bei dem in Fig. 2 gezeigten Objekt;

Fig. 4    eine schematische Ansicht des Ultraschallsignals bei einem hohen Objekt;

Fig. 5    eine schematische Darstellung des reflektierten Ultraschallsignals bei dem in Fig. 4 gezeigten Objekt;

Fig. 6    eine schematische Ansicht des Ultraschallsignals bei einem mittelhohen Objekt;

Fig. 7    eine schematische Darstellung des reflektierten Ultraschallsignals bei dem in Fig. 6 gezeigten Objekt;

Fig. 8    eine schematische Ansicht des Ultraschallsignals bei einem komplexen Objekt; und

Fig. 9    eine schematische Darstellung des reflektierten Ultraschallsignals bei dem in Fig. 8 gezeigten Objekt.

Bei der nachfolgenden Beschreibung werden für gleiche und gleich wirkende Teile dieselben Bezugsziffern verwendet.

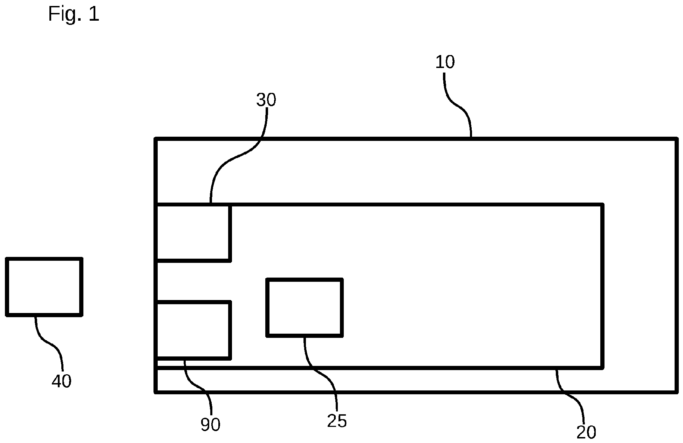

Fig. 1 zeigt eine schematische Ansicht einer beispielhaften ersten Ausführungsform des erfindungsgemäßen Kraftfahrzeugs 10.

Das Kraftfahrzeug 10 umfasst ein System 20, das wiederum einen Ultraschallsender zum Senden eines Ultraschallsignals 35 und einen Ultraschallempfänger 30 zum Empfangen des reflektierten Ultraschallsignals 37 und zum Weiterleiten der Daten an eine Auswertevorrichtung 25 aufweist. Der Ultraschallsender kann als Ultraschallempfänger 30 fungieren.

Zudem umfasst das Kraftfahrzeug 10 bzw. das System 20 die Auswertevorrichtung 25 zum Auswerten des reflektierten Ultraschallsignals 37, das von dem Ultraschallempfänger 30 empfangen und dessen Daten an die Auswertevorrichtung 25 weitergeleitet werden.

Das System 20 kann eine Einparkhilfe bzw. Warnhilfe für ein Kraftfahrzeug 10 sein.

Bei dem Kraftfahrzeug 10 bzw. in dem System 20 wird folgendes Verfahren durchgeführt.

Zunächst wird ein Ultraschallsignal 35 von dem Ultraschallsender ausgesandt bzw. abgestrahlt. Das Ultraschallsignal 35 kann ein lineares Chirp-Signal sein, d.h. ein lineares Ultraschallsignal mit konstant ansteigender Frequenz (Chirp-up) oder ein lineares Ultraschallsignal mit konstant abfallender Frequenz (Chirp-down).

Das Ultraschallsignal 35 wird von Flächen des Objekts 40 und/oder dem Boden 45 reflektiert und das reflektierte Ultraschallsignal 37 wird von dem Ultraschallempfänger 30 empfangen.

Das empfangene reflektierte Ultraschallsignal 37 bzw. die Daten des reflektierten empfangenen Ultraschallsignals 37 werden von dem Ultraschallempfänger 30 zu der Auswertevorrichtung 25 weitergeleitet und von der Auswertevorrichtung 25 ausgewertet. Die Auswertevorrichtung 25 führt eine Klassifikation bzw. Kategorisierung des mindestens einen Objekts 40 anhand bzw. auf Grundlage der Höhe in mindestens zwei verschiedenen Kategorien durch.

Das Verfahren klassifiziert das Objekt 40 oder die Objekte (z.B. Objekte, die sich um das Fahrzeug herum befinden) anhand bzw. aufgrund bzw. nach ihrer Höhe. Die Objekte 40 werden nach ihrer bestimmten Höhe zumindest in eine von zwei Kategorien klassifiziert: 1. Das Objekt 40 ist ein hohes Objekt, d.h. das Objekt 40 erstreckt sich in seiner Höhe (deutlich) über die Höhe hinaus, auf der der Ultraschallsender/Ultraschallempfänger 30 angeordnet ist. 2. Das Objekt 40 ist ein nicht-hohes Objekt, d.h. das Objekt 40 erstreckt sich nicht bis zur Höhe, auf der der Ultraschallsender/-Ultraschallempfänger 30 angeordnet ist.

Für diese Klassifikation wird das reflektierte Ultraschallsignal 37 (Echo) bzw. die Daten hiervon analysiert bzw. ausgewertet.

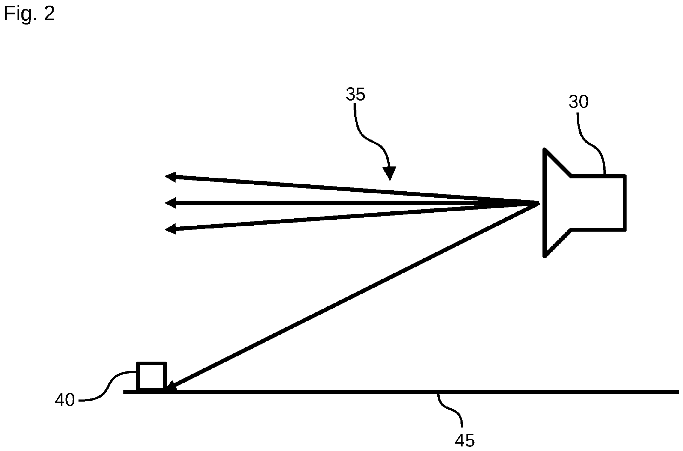

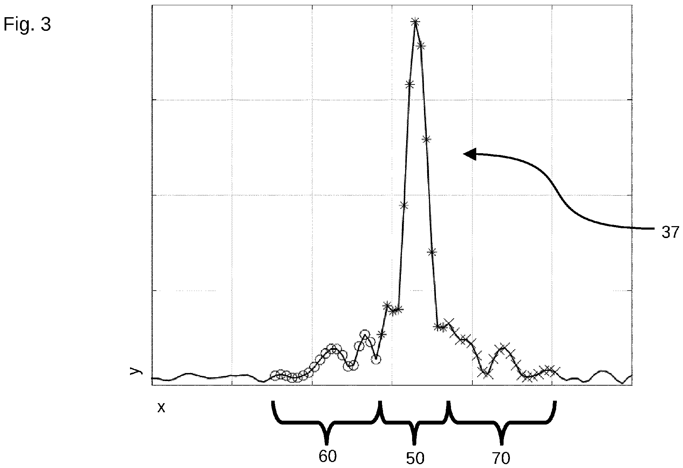

Fig. 2 zeigt eine schematische Ansicht des reflektierten Ultraschallsignals 37 bei einem nichthohen bzw. niedrigen Objekt. Fig. 3 zeigt eine schematische Darstellung des reflektierten Ultraschallsignals 37 bei dem in Fig. 2 gezeigten Objekt 40.

Das Objekt 40 in Fig. 2 kann beispielsweise ein Bordstein, eine flache Kante z.B. einer Garageneinfahrt oder ähnliches sein. Der Ultraschallsender/Ultraschallempfänger 30 befindet sich deutlich oberhalb der oberen Kante des Objekts 40, d.h. die Höhenposition des Ultraschallsenders/Ultraschallempfängers 30 liegt deutlich oberhalb der oberen Kante des Objekts 40. Beispielsweise ist das niedrige Objekt 40 ca. 10 cm hoch, während der Ultraschallsender/Ultraschallempfänger 30 in einer Höhe von ca. 50 cm oder ca. 80 cm oberhalb des Bodens 45 angeordnet ist.

Die Höhe des Objekts 40 erstreckt sich in Fig. 2 von unten nach oben.

In Fig. 3 ist auf der x-Achse der zeitliche Verlauf bzw. der Abstand der jeweiligen Reflektionsfläche von dem Ultraschallsender/Ultraschallempfänger 30 aufgetragen und auf der y-Achse die Stärke des Signals bzw. der jeweilige Messwert.

Bei dem Verfahren werden in einem vorgegebenen Bereich 50 um das globale Maximum herum die Werte des reflektierten Ultraschallsignals 37 addiert. Dies bedeutet, dass die Fläche unterhalb der Kurve des reflektierten Ultraschallsignals 37 um das globale Maximum herum bestimmt bzw. berechnet wird. Diese Summe bzw. die Fläche ist der erste Summenwert. Alternativ kann der erste Summenwert gebildet werden, indem eine Potenz (z.B. das Quadrat) der Messwerte in dem Bereich 50 um das lokale Maximum bzw. globale Maximum aufsummiert werden. Die Summe der Quadrate der Messwerte entsprechen der Energie in diesem ersten Bereich 50.

In Fig. 3 ist dieser erste Bereich 50 bzw. die Messwerte innerhalb des ersten Bereichs 50 mit Sternchen als Messpunkte gekennzeichnet. Der erste Bereich 50 umfasst in Fig. 3 zwölf Messwerte.

Unmittelbar vor dem ersten Bereich 50 (somit unmittelbar angrenzend an den ersten Bereich 50) ist ein zweiter Bereich 60 angeordnet. Der zweite Summenwert wird durch Addition der Messwerte in diesem zweiten Bereich 60 gebildet. Dies entspricht der Fläche unterhalb der Kurve der Messwerte in diesem zweiten Bereich 60. Alternativ können die Quadrate der Messwerte in dem zweiten Bereich 60 addiert werden, um den zweiten Summenwert zu bilden. Die Messwerte in dem zweiten Bereich 60 sind in Fig. 3 durch Kreise gekennzeichnet. In Fig. 3 umfasst der zweite Bereich 60 neunzehn Messwerte.

Unmittelbar nach dem ersten Bereich 50 (und somit unmittelbar angrenzend an den ersten Bereich 50) ist ein dritter Bereich 70 angeordnet. Der dritte Summenwert wird durch Addition der Messwerte in dem dritten Bereich 70 gebildet. Dies entspricht der Fläche unterhalb der Kurve der Messwerte in dem dritten Bereich 70. Alternativ können die Quadrate der Messwerte in dem dritten Bereich 70 addiert werden, um den dritten Summenwert zu bilden. Die Messwerte in dem dritten vorgegebenen Bereich 70 sind in Fig. 3 durch Kreuze gekennzeichnet. Der dritte Bereich 70 weist in Fig. 3 zwanzig Messwerte auf.

Der erste Bereich 50 kann symmetrisch um das Maximum angeordnet sein. Dies bedeutet, dass das globale Maximum in der Mitte des ersten Bereichs 50 ist. Denkbar ist jedoch auch, dass der erste Bereich 50 asymmetrisch um das Maximum herum angeordnet ist.

Der erste Bereich 50 kann beispielsweise den Maximalwert und die fünf dem Maximalwert unmittelbar vorgelagerten Messwerte und die fünf zeitlich dem Maximalwert unmittelbar nachgelagerten Messwerte umfassen.

Der Breite des ersten Bereichs 50, des zweiten Bereichs 60 und des dritten Bereichs 70 können gleichgroß sein. Z.B. kann die Breite jeweils das 1,5fache oder Doppelte des ersten Bereichs 50 betragen. Vorstellbar ist jedoch, dass der erste Bereich 50 halb so groß wie der zweite Bereich 60 und halb so groß wie der dritte Bereich 70 ist. Auch können der zweite Bereich 60 bzw. der dritte Bereich 70 jeweils dreimal so groß wie der erste Bereich 50 sein.

Die Breite der verschiedenen Bereiche 50, 60, 70 kann empirisch festgelegt werden.

Die drei Summenwerte werden nun zueinander ins Verhältnis gesetzt. Anschließend werden diese mit einem Schwellenwert verglichen.

Es wird ein erster Differenzwert gebildet, indem der dritte Summenwert mit einem ersten vorgegebenen Faktor multipliziert wird und hiervon der erste Summenwert subtrahiert:

erster Differenzwert = erster vorgegebener Faktor * dritter Summenwert - erster Summenwert

Der erste vorgegebene Faktor bestimmt mit, wann der erste Differenzwert ein positives Vorzeichen hat und wann der erste Differenzwert ein negatives Vorzeichen aufweist. Somit kann hiermit die Schwelle bzw. der Schwellenwert festgelegt werden, wann ein Objekt 40 als hoch, als mittelhoch oder als niedrig bzw. nicht-hoch klassifiziert wird.

Ein zweiter Differenzwert wird gebildet, indem der zweite Summenwert mit einem zweiten vorgegebenen Faktor multipliziert wird und hiervon der erste Summenwert subtrahiert:

zweiter Differenzwert = zweiter vorgegebener Faktor * zweiter Summenwert – erster Summenwert

Der zweite vorgegebene Faktor kann derselbe wie der erste vorgegebene Faktor sein. Denkbar ist, dass die beiden Faktoren unterschiedlich sind.

Der erste vorgegebene Faktor und der zweite vorgegebene Faktor werden so eingestellt bzw. so ausgewählt, dass sich die Vorzeichen des ersten Differenzwerts und des zweiten Differenzwerts für die jeweiligen Objekte wie folgt ergeben.

Der erste vorgegebene Faktor bzw. der zweite vorgegebene Faktor kann z.B. im Bereich von ca. 3 bis ca. liegen, insbesondere wenn die Summen selbst addiert werden.

Wenn die Potenzen, z.B. die Quadrate der Messwerte addiert werden, kann der erste vorgegebene Faktor bzw. der zweite vorgegebene Faktor im Bereich von ca. 12 bis 20, z.B. bei 16, liegen.

Nun wird abhängig von den Vorzeichen des ersten Differenzwerts und des zweiten Differenzwerts die Klassifikation durchgeführt.

Wenn der erste Differenzwert ein negatives Vorzeichen aufweist und der zweite Differenzwert ein negatives Vorzeichen aufweist, so wird das Objekt 40 als tiefes bzw. niedriges bzw. nicht-hohes Objekt klassifiziert.

Wenn der erste Differenzwert ein positives Vorzeichen hat oder der zweite Differenzwert ein positives Vorzeichen aufweist, wird das Objekt 40 als hohes Objekt klassifiziert. Das "oder" kann ein "exklusiv-oder" sein.

Wenn das erste Differenzwert ein positives Vorzeichen hat und der zweite Differenzwert ein positives Vorzeichen aufweist, wird das Objekt 40 als komplexes Objekt klassifiziert. Ein komplexes Objekt weist mehrere Reflektionsflächen auf und weist folglich keine einfache bzw. simple geometrische Struktur auf.

In Fig. 2 ist ein niedriges Objekt 40 (z.B. ein Bordstein) gezeigt, d.h. ein Objekt 40, dessen oberes Ende sich (deutlich) unterhalb des Ultraschallsenders/Ultraschallempfängers 30 befindet. In Fig. 3 ist zu erkennen, dass das Echo bzw. das reflektierte Ultraschallsignal 37 im Wesentlichen aus einem Hauptsignal bzw. peak bzw. einem Echosignal besteht, das sich im Wesentlichen vollständig in dem ersten Bereich 50 um das globale Maximum befindet. Folglich sind die Vorzeichen des ersten Differenzwerts und des zweiten Differenzwerts negativ und das Objekt 40 wird als tiefes bzw. niedriges bzw. nicht-hohes Objekt klassifiziert.

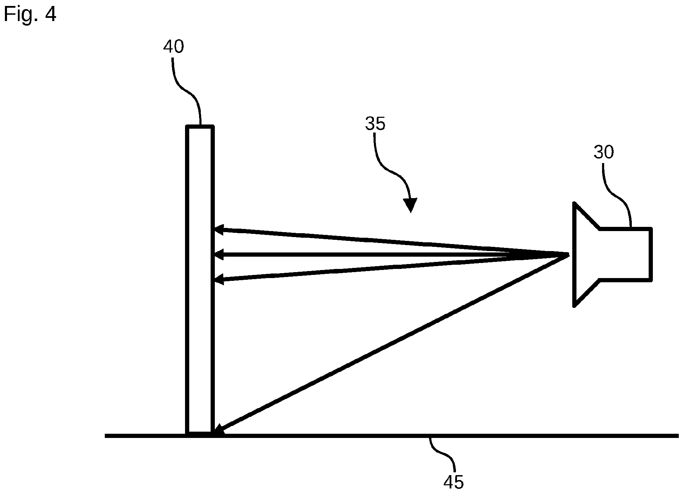

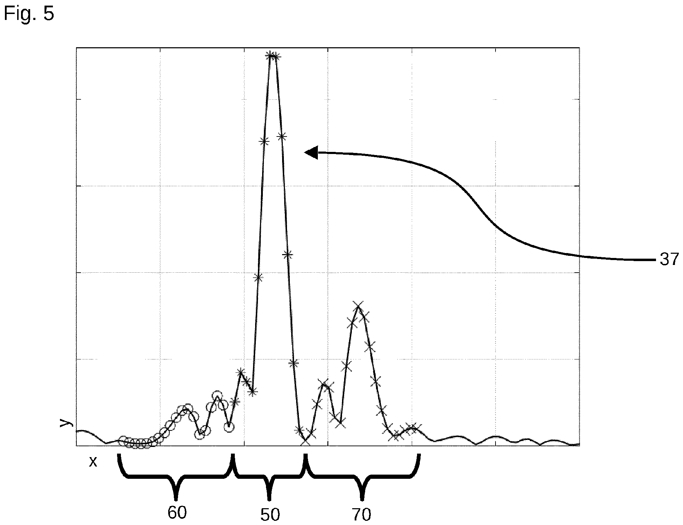

Fig. 4 zeigt eine schematische Ansicht des Ultraschallsignals 37 bei einem hohen Objekt. Fig. 5 zeigt eine schematische Darstellung des reflektierten Ultraschallsignals 37 bei dem in Fig. 4 gezeigten Objekt 40.

Das Objekt 40 erstreckt sich deutlich über die Höhe, in der der Ultraschallsender/Ultraschallempfänger 30 angeordnet ist. Das Objekt 40 kann z.B. eine Hauswand oder ein Rohr bzw. eine Rohrleitung sein.

Das reflektierte Ultraschallsignal 37 bzw. das Echo weist ein hohes direktes Maximum/Echo auf, sowie zeitlich nachfolgend ein kleineres Signal bzw. lokales Maximum bzw. Echo durch den Eckreflektor Objekt 40 /Boden 45 auf.

In diesem Fall weist der erste Differenzwert ein positives Vorzeichen auf oder der zweite Differenzwert weist ein positives Vorzeichen auf.

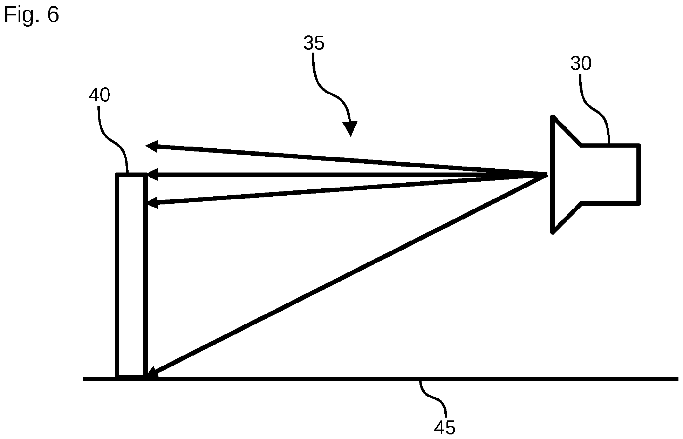

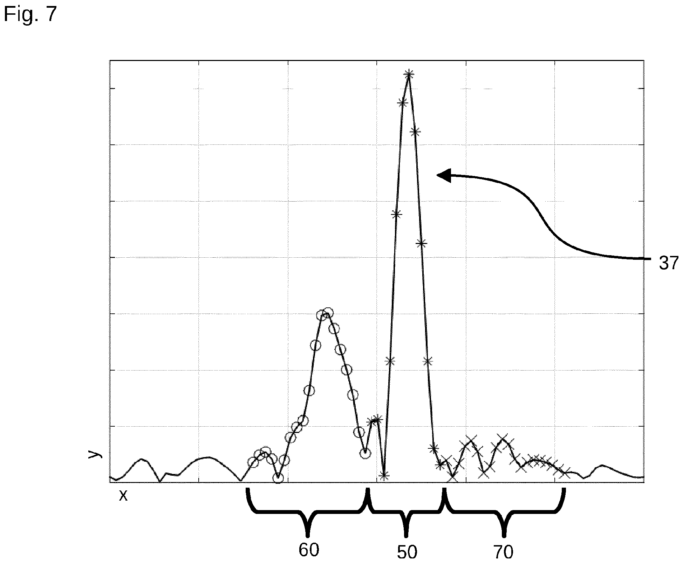

Fig. 6 zeigt eine schematische Ansicht des Ultraschallsignals 35 bei einem mittelhohen Objekt. Fig. 7 zeigt eine schematische Darstellung des reflektierten Ultraschallsignals 37 bei dem in Fig. 6 gezeigten Objekt 40.

Das mittelhohe Objekt erstreckt sich bis knapp unterhalb der Höhe, auf der sich der Ultraschallsender/Ultraschallempfänger 30 befindet. Hierbei streift die Hauptschallkeule des ausgesandten Ultraschallsignals 35 die Oberkante des Objekts 40, was zu einem kleinen, aber deutlichen Echo bzw. lokalen Maxima führt, das dem absoluten Maximum (zeitlich) vorgelagert ist.

Auf diese Weise können Gegenstände, die sich bis etwas bzw. knapp unterhalb der Höhe des Ultraschallsenders/Ultraschallempfängers 30 erstrecken (z.B. bis ca. 10 cm unterhalb der Höhe), in eine eigene Kategorie klassifizieren.

In diesem Fall hat der zweite Differenzwert ein negatives Vorzeichen und der erste Differenzwert hat ein positives Vorzeichen.

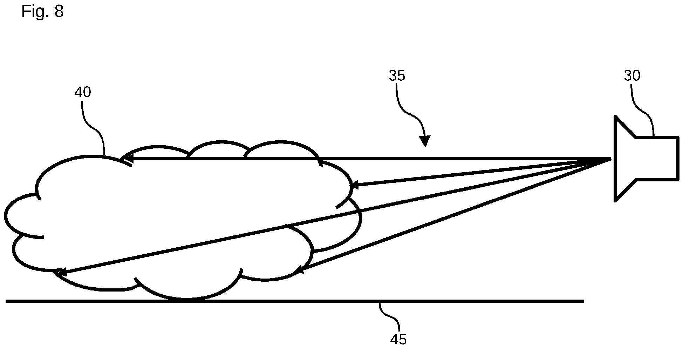

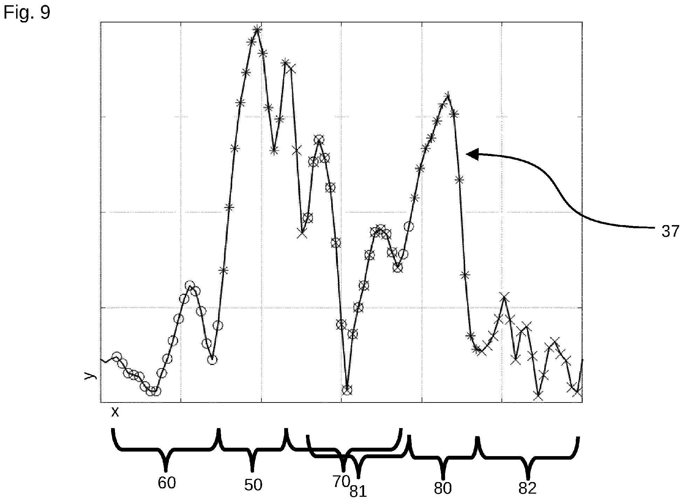

Fig. 8 zeigt eine schematische Ansicht des Ultraschallsignals 35 bei einem komplexen Objekt. Fig. 9 zeigt eine schematische Darstellung des reflektierten Ultraschallsignals 37 bei dem in Fig. 8 gezeigten Objekt 40.

Ein komplexes Objekt weist mehrere Reflektionsflächen (in unterschiedlichen Abständen) für das Ultraschallsignal 35 auf. In Fig. 8 ist ein Gebüsch gezeigt, jedoch kann das komplexe Objekt auch eine Front oder ein Heck eines Fahrzeugs (z.B. eines PKW oder eines Motorrads), ein Mensch, ein Tier oder ähnliches sein.

Bei dem komplexen Objekt gibt es ein absolutes Maximum des Signals. Der erste Differenzwert weist ein negatives Vorzeichen auf und der zweite Differenzwert weist ein negatives Vorzeichen auf. Der erste Bereich 50 ist um das absolute Maximum des Signals angeordnet. Es gibt zudem deutlich ausgeprägte lokale Maxima, die fast so hoch wie das absolute Maximum sind, obwohl sie außerhalb des ersten Bereichs 50, des zweiten Bereichs 60 und des dritten Bereichs 70 liegen. Im Außenbereich bzw. im Freien können sich die Maxima ständig ändern.

Ein vierter Bereich 80 ist um das rechte lokale Maximum (dritthöchster Wert insgesamt) angeordnet. Unmittelbar nachfolgend nach dem vierten Bereich 80 ist ein sechster Bereich 82 angeordnet und unmittelbar vor dem vierten Bereich 80 ist ein fünfter Bereich 81 angeordnet.

Mittels dem vierten Bereich 80, dem fünften Bereich 81 und dem sechsten Bereich 82 wird ein vierter, fünfter und sechster Summenwert gebildet, entsprechend der Bildung des ersten, zweiten und dritten Summenwerts. Dies bedeutet: der vierte Summenwert wird durch Addition der Messwerte in dem vierten Bereich 80 gebildet; der fünfte Summenwert wird durch Addition der Messwerte in dem fünften Bereich 81 gebildet; der vierte Summenwert wird durch Addition der Messwerte in dem sechsten Bereich 82 gebildet.

Anschließend wird ein dritter Differenzwert und ein vierter Differenzwert, entsprechend der Bildung des ersten Differenzwerts und des zweiten Differenzwerts gebildet:

$$\text{dritter Differenzwert} = \text{vorgegebener Faktor} * \text{sechster Summenwert} - \text{vierter Summenwert}$$

$$\text{Vierter Differenzwert} = \text{vorgegebener Faktor} * \text{fünfter Summenwert} - \text{vierter Summenwert}$$

Anschließend wird abhängig von den Vorzeichen des dritten Differenzwerts und des vierten Differenzwerts eine Klassifizierung des Objekts 40 durchgeführt, wobei für die Klassifizierung dieselben Regeln hinsichtlich der Kombination der Vorzeichen wie für den ersten Differenzwert und den zweiten Referenzwert gelten können.

Das heißt, dass das Signal sozusagen in zwei Abschnitte aufgeteilt wird und in diesen beiden Abschnitten das jeweilige globale Maximum bestimmt wird. Dann werden die Differenzwerte für diese beiden Abschnitte unabhängig voneinander. Die beiden Abschnitte können sich miteinander überschneiden.

Sozusagen wird nach dem dritten Bereich 70 bzw. rechts des dritten Bereichs 70 das Signal bzw. der globale Maximalwert bzw. das globale Maximum wieder auf Null gesetzt und erneut ein globales Maximum bestimmt.

Wenn das Vorzeichen des ersten Differenzwerts oder, insbesondere exklusiv-oder, des zweiten Differenzwerts in dem ersten Abschnitt positiv ist und wenn das Vorzeichen des dritten Differenzwerts oder, insbesondere exklusiv-oder, des vierten Differenzwerts positiv ist, wird davon ausgegangen, dass ein komplexes Objekt vorliegt, d.h. ein Objekt mit unterschiedlichen Reflektionsflächen zu dem Ultraschallsender/Ultraschallempfänger 30.

Das Ergebnis der Klassifikation des Objekts 40 kann an einen Menschen und/oder an eine Datenschnittstelle ausgegeben werden.

Der dritte Bereich 70 und der fünfte Bereich 81 überschneiden sich in Fig. 9 teilweise; in diesem Bereich 70, 81 sind die Messpunkte mit einem Kreis und einem Kreuz gekennzeichnet.

Es ist möglich, dass das Verfahren, das in Zusammenhang mit den Fig. 2-7 beschrieben wurde, zweimal ausgeführt wird. Die Bereiche (entlang der x-Achse), in denen das Verfahren, das in Zusammenhang mit den Fig. 2-7 beschrieben wurde, ausgeführt wird, können sich hierbei überlappen. So überlappt beispielsweise der dritte Bereich 70 den fünften Bereich 81 in Fig. 9. Dies bedeutet, dass das komplexe Objekt derart weit ausgedehnt ist bzw. Reflektionsflächen in derart unterschiedlichen Abständen zu dem Ultraschallsender/Ultraschallempfänger 30 aufweist, dass das Verfahren zweimal ausgeführt wird, wobei bei dem zweimaligen Durchlaufen bzw. Ausführen des Verfahrens, das in Zusammenhang mit den Fig. 2-7 beschrieben wurde, von zwei unterschiedlichen absoluten Maxima (in zwei unterschiedlichen Teilen entlang der x-Achse) ausgegangen wird.

Bei dem Verfahren kann eine Wahrscheinlichkeitskennzahl bestimmt bzw. ausgegeben werden. Die Wahrscheinlichkeitskennzahl $P$ gibt an, wie zuverlässig bzw. sie sicher das Objekt 40 in die jeweilige Kategorie zutreffend klassifiziert wurde. Die Wahrscheinlichkeitskennzahl kann eine Zahl zwischen 0 und 1 sein. Es ist möglich, dass die Wahrscheinlichkeitskennzahl durch eine Sigmoid-Funktion bestimmt wird:

$$P = \text{sigmoid}\,(\beta * ((\alpha * 1.\ \text{Differenzwert}/2.\ \text{Differenzwert}) - 1))$$

wobei

$\alpha$ der Faktor ist, mit dem der erste Summenwert und/oder der dritte Summenwert bei der Bildung des jeweiligen Differenzwerts multipliziert wird, und

$\beta$ eine vorgegebene Zahl ist derart, dass der Wert P zwischen 0 und 1 liegt.

Das Ultraschallsignal 35 kann ein Ultraschallsignal mit ansteigender Frequenz sein.

Das Kraftfahrzeug 10 kann ferner einer Kamera 90, z.B. eine Rückfahrkamera, aufweisen. Die Klassifikation der Auswertevorrichtung 25 kann mit den Daten bzw. dem Bild der Kamera 90 kombiniert werden und eine übergeordnete Erkennungseinheit kann mit Hilfe der Klassifikation und den Kameradaten eine zuverlässige Erkennung der Höhe von Objekten durchführen. Insbesondere kann die Erkennungseinheit 25 bestimmen, ob das Objekt 40 durch das Kraftfahrzeug 10 ohne Schäden überfahrbar ist oder nicht. Wenn das Objekt durch das Kraftfahrzeug 10 nicht ohne erwartbare Schäden überfahrbar ist, kann die Erkennungseinheit ein Warnsignal ausgeben und/oder das Kraftfahrzeug 10 abbremsen.

Bezugszeichenliste

10 Kraftfahrzeug
20 System
25 Auswertevorrichtung
30 Ultraschallsender/Ultraschallempfänger
35 ausgesendetes Ultraschallsignal
37 reflektiertes Ultraschallsignal
40 Objekt
45 Boden
50 erster Bereich
60 zweiter Bereich
70 dritter Bereich
80 vierter Bereich
81 fünfter Bereich
82 sechster Bereich
90 Kamera

**Patentansprüche**

1. Verfahren zum Klassifizieren mindestens eines Objekts (40) anhand der Höhe des Objekts (40) auf Grundlage der Daten eines von dem Objekt (40) reflektierten Ultraschallsignals (37), wobei das Verfahren folgende Schritte umfasst:

Empfangen der Daten des reflektierten Ultraschallsignals (37);
Bestimmen eines ersten Summenwerts, wobei der erste Summenwert die Summe der Werte des reflektierten Ultraschallsignals (37) in einem ersten vorgegebenen Bereich (50) um ein globales Maximum des reflektierten Ultraschallsignals (37) herum ist oder der erste Summenwert die Summe der potenzierten Werte des reflektierten Ultraschallsignals (37) in einem ersten vorgegebenen Bereich (50) um ein globales Maximum des reflektierten Ultraschallsignals (37) herum ist;
Bestimmen eines zweiten Summenwerts, wobei der zweite Summenwert die Summe der Werte des reflektierten Ultraschallsignals (37) in einem zweiten vorgegebenen Bereich (60), der dem ersten vorgegebenen Bereich (50) unmittelbar vorgelagert ist, ist oder der zweite Summenwert die Summe der potenzierten Werte des reflektierten Ultraschallsignals (37) in einem zweiten vorgegebenen Bereich (60), der dem ersten vorgegebenen Bereich (50) unmittelbar vorgelagert ist, ist;
Bestimmen eines dritten Summenwerts, wobei der dritte Summenwert die Summe der Werte des reflektierten Ultraschallsignals (37) in einem dritten vorgegebenen Bereich (70), der dem ersten vorgegebenen Bereich (50) unmittelbar nachgelagert ist, ist oder der dritte Summenwert die Summe der potenzierten Werte des reflektierten Ultraschallsignals (37) in einem dritten vorgegebenen Bereich (70), der dem ersten vorgegebenen Bereich (50) unmittelbar nachgelagert ist, ist;

Bestimmen eines ersten Differenzwerts auf Grundlage einer, insbesondere gewichteten, Differenzbildung aus dem dritten Summenwert und dem ersten Summenwert;

Bestimmen eines zweiten Differenzwerts auf Grundlage einer, insbesondere gewichteten, Differenzbildung aus dem zweiten Summenwert und dem ersten Summenwert; und

Klassifizieren des mindestens einen Objekts (40) auf Grundlage des ersten Differenzwerts und des zweiten Differenzwerts, insbesondere auf Grundlage der Vorzeichen des ersten Differenzwerts und des zweiten Differenzwerts, in eine von zumindest zwei Höhenkategorien.

2. Verfahren nach Anspruch 1, wobei
bei der Bestimmung des ersten Differenzwerts der dritte Summenwert mit einem vorgegebenen Faktor und/oder bei der Bestimmung des zweiten Differenzwerts der zweite Summenwert mit einem vorgegebenen Faktor multipliziert wird.

3. Verfahren nach Anspruch 1 oder 2, wobei
das mindestens eine Objekt (40) als ein Objekt, das sich im Wesentlichen vollständig unterhalb der Höhe eines Ultraschallempfängers (30) des reflektierten Ultraschallsignals (37) befindet, klassifiziert wird, wenn sowohl der erste Differenzwert als auch der zweite Differenzwert ein negatives Vorzeichen aufweisen.

4. Verfahren nach einem der vorhergehenden Ansprüche, wobei
das mindestens eine Objekt (40) als ein Objekt, das sich zumindest teilweise oberhalb einer Höhe eines Ultraschallempfängers (30) des reflektierten Ultraschallsignals (37) befindet, klassifiziert wird, wenn der erste Differenzwert ein positives Vorzeichen oder der zweite Differenzwert ein positives Vorzeichen aufweist.

5. Verfahren nach einem der vorhergehenden Ansprüche, wobei
das mindestens eine Objekt (40) als ein Objekt, das mehrere reflektierende Flächen aufweist, klassifiziert wird, wenn der erste Differenzwert ein positives Vorzeichen und der zweite Differenzwert ein positives Vorzeichen aufweisen.

6. Verfahren nach einem der vorhergehenden Ansprüche, wobei
bei dem Schritt des Klassifizierens des Objekts (40) zusätzliche Sensorinformationen, insbesondere visuelle Sensorinformationen, über das Objekt (40) berücksichtigt werden.

7. Verfahren nach einem der vorhergehenden Ansprüche, wobei
das Ultraschallsignal ein lineares Ultraschallsignal mit, insbesondere konstant, ansteigender oder abfallender Frequenz umfasst oder ist.

8. Verfahren nach einem der vorhergehenden Ansprüche, wobei
ferner eine Wahrscheinlichkeitskennzahl, die die Zuverlässigkeit der durchgeführten Klassifikation des mindestens einen Objekts (40) angibt, auf Grundlage der Summenwerte bestimmt wird.

9. Verfahren nach einem der vorhergehenden Ansprüche, wobei
das mindestens eine Objekt (40) als ein Objekt, das sich fast bis zu der Höhe eines Ultraschallempfängers (30) des reflektierten Ultraschallsignals (37) erstreckt, klassifiziert wird, wenn das Vorzeichen des ersten Differenzwerts negativ ist und das Vorzeichen des zweiten Differenzwerts positiv ist.

10. Verfahren nach einem der vorhergehenden Ansprüche, wobei
das Verfahren ferner folgende Schritte umfasst:

Bestimmen eines vierten Summenwerts, wobei der vierte Summenwert die Summe der Werte des reflektierten Ultraschallsignals (37) in einem vierten vorgegebenen Bereich (82) um ein lokales Maximum des reflektierten Ultraschallsignals (37) herum ist oder der vierte Summenwert die Summe der potenzierten Werte des reflektierten Ultraschallsignals (37) in einem vierten vorgegebenen Bereich (82) um ein lokales Maximum des reflektierten Ultraschallsignals (37) herum ist, wobei der vierte vorgegebene Bereich (82) dem ersten vorgegeben Bereich (50) nachgeordnet ist;

Bestimmen eines fünften Summenwerts, wobei der fünfte Summenwert die Summe der Werte des reflektierten Ultraschallsignals (37) in einem fünften vorgegebenen Bereich (81), der dem vierten vorgegebenen Bereich (80) unmittelbar vorgelagert ist, ist oder der fünfte Summenwert die Summe der potenzierten Werte des reflektierten Ultraschallsignals (37) in einem fünften vorgegebenen Bereich (81), der dem vierten vorgegebenen Bereich (80) unmittelbar vorgelagert ist, ist;

Bestimmen eines sechsten Summenwerts, wobei der sechste Summenwert die Summe der Werte des reflektierten Ultraschallsignals (37) in einem sechsten vorgegebenen Bereich (82), der dem vierten vorgegebenen Bereich (80) unmittelbar nachgelagert ist, ist oder der sechste Summenwert die Summe der potenzierten Werte des reflektierten Ultraschallsignals (37) in einem sechsten vorgegebenen Bereich (82), der dem vierten vorgegebenen Bereich (80) unmittelbar nachgelagert ist, ist;

Bestimmen eines dritten Differenzwerts auf Grundlage einer, insbesondere gewichteten, Differenzbildung aus dem sechsten Summenwert und dem vierten Summenwert;

Bestimmen eines vierten Differenzwerts auf Grundlage einer, insbesondere gewichteten, Differenzbildung aus dem fünften Summenwert und dem vierten Summenwert;

wobei

der Schritt des Klassifizierens des mindestens einen Objekts (40) in eine von zumindest zwei Höhenkategorien auf Grundlage des ersten Differenzwertwerts, des zweiten Differenzwertwerts, des dritten Differenzwerts und des vierten Differenzwerts durchgeführt wird.

11. Computerprogrammprodukt, das von einem Prozessor eines Computers lesbare Instruktionen aufweist, die, wenn sie von dem Prozessor ausgeführt werden, den Prozessor veranlassen, das Verfahren nach einem der vorhergehenden Ansprüche auszuführen.

12. Computerlesbares Medium, auf dem das Computerprogrammprodukt nach Anspruch 11 gespeichert ist.

13. Auswertevorrichtung (25) zum Auswerten eines von einem Objekt (40) reflektierten Ultraschallsignals (37), wobei die Auswertevorrichtung (25)

- zum Empfangen der Daten des reflektierten Ultraschallsignals (37),
- zum Bestimmen eines ersten Summenwerts, wobei der erste Summenwert die Summe der Werte des reflektierten Ultraschallsignals (37) in einem ersten vorgegebenen Bereich (50) um ein globales Maximum des reflektierten Ultraschallsignals (37) herum ist oder der erste Summenwert die Summe der potenzierten Werte des reflektierten Ultraschallsignals (37) in einem ersten vorgegebenen Bereich (50) um ein globales Maximum des reflektierten Ultraschallsignals (37) herum ist,
- zum Bestimmen eines zweiten Summenwerts, wobei der zweite Summenwert die Summe der Werte des reflektierten Ultraschallsignals (37) in einem zweiten vorgegebenen Bereich (60), der dem ersten vorgegebenen Bereich (50) unmittelbar vorgelagert ist, ist oder der zweite Summenwert die Summe der potenzierten Werte des reflektierten Ultraschallsignals (37) in einem zweiten vorgegebenen Bereich (60), der dem ersten vorgegebenen Bereich (50) unmittelbar vorgelagert ist, ist,
- zum Bestimmen eines dritten Summenwerts, wobei der dritte Summenwert die Summe der Werte des reflektierten Ultraschallsignals (37) in einem dritten vorgegebenen Bereich (70), der dem ersten vorgegebenen Bereich (50) unmittelbar nachgelagert ist, ist oder der dritte Summenwert die Summe der potenzierten Werte des reflektierten Ultraschallsignals (37) in einem dritten vorgegebenen Bereich (70), der dem ersten vorgegebenen Bereich (50) unmittelbar nachgelagert ist, ist,
- zum Bestimmen eines ersten Differenzwerts auf Grundlage einer, insbesondere gewichteten, Differenzbildung aus dem dritten Summenwert und dem ersten Summenwert,
- zum Bestimmen eines zweiten Differenzwerts auf Grundlage einer, insbesondere gewichteten, Differenzbildung aus dem zweiten Summenwert und dem ersten Summenwert, und
- zum Klassifizieren des mindestens einen Objekts (40) auf Grundlage des ersten Differenzwertwerts und des zweiten Differenzwertwerts, insbesondere auf Grundlage der Vorzeichen des ersten Differenzwertwerts und des zweiten Differenzwertwerts, in eine von zumindest zwei Höhenkategorien ausgebildet ist.

14. System (20) umfassend

eine Auswertevorrichtung (25) nach Anspruch 13,
einen Ultraschallsender zum Senden des Ultraschallsignals (35) in Richtung eines Objekts (40), und
einen Ultraschallempfänger (30) zum Empfangen des von dem Objekt (40) reflektierten Ultraschallsignals (37) und zum Weiterleiten der Daten des reflektierten Ultraschallsignals (37) an die Auswertevorrichtung (25).

15. Kraftfahrzeug (10) umfassend ein System (20) nach Anspruch 14.

Fig. 1

Fig. 2

Fig. 3

Fig. 4

Fig. 5

Fig. 6

Fig. 7

Fig. 8

Fig. 9

**Europäisches Patentamt**
**European Patent Office**
**Office européen des brevets**

# EUROPÄISCHER RECHERCHENBERICHT

**Nummer der Anmeldung**

EP 23 21 2650

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2018 103560 A1 (VALEO SCHALTER & SENSOREN GMBH [DE]) 22. August 2019 (2019-08-22) * Absätze [0048] – [0053]; Abbildungen 3,4,8-15 * ----- | 1-15 | INV. G01S7/539 G01S15/931 |
| A | DE 10 2015 218537 A1 (BOSCH GMBH ROBERT [DE]) 30. März 2017 (2017-03-30) * Absätze [0039] – [0042]; Abbildungen 2A-3B * ----- | 1-15 | |
| A | DE 10 2018 103414 A1 (VALEO SCHALTER & SENSOREN GMBH [DE]) 22. August 2019 (2019-08-22) * Absätze [0036] – [0038]; Abbildungen 5-7 * ----- | 1-15 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 23. April 2024 | Schmelz, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 23 21 2650

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2024

| Im Recherchenbericht angeführtes Patentdokument | Datum der Veröffentlichung | Mitglied(er) der Patentfamilie | Datum der Veröffentlichung |
|---|---|---|---|
| DE 102018103560 A1 | 22-08-2019 | KEINE | |
| DE 102015218537 A1 | 30-03-2017 | KEINE | |
| DE 102018103414 A1 | 22-08-2019 | KEINE | |

EPO FORM P0461

Für nähere Einzelheiten zu diesem Anhang : siehe Amtsblatt des Europäischen Patentamts, Nr.12/82